# FASCICULE DE BREVET EUROPEEN

(11) **EP 3 980 329 B1**
(45) Date de publication et mention de la délivrance du brevet: **17.01.2024**
(21) Numéro de dépôt: 20737266.5
(22) Date de dépôt: 28.05.2020
(51) Int. Cl.: B64D 1/22

(54) **DISPOSITIF ET PROCÉDÉ DE GESTION DE BALLASTS**
VORRICHTUNGEN UND VERFAHREN FÜR BALLASTMANAGEMENT
DEVICE AND METHOD FOR BALLAST MANAGEMENT

(30) Priorité: 06.06.2019 FR 1906030
(43) Date de publication de la demande: 13.04.2022
(73) Titulaire: Flying Whales, 92150 Suresnes (FR)
(72) Inventeur: BOUGON, Sébastien, 92150 Suresnes (FR); LE FRANCOIS, Bastien, 92150 Suresnes (FR)
(74) Mandataire: IP Trust
(86) Numéro de dépôt international: PCT/FR2020/050913
(87) Numéro de publication internationale: WO 2020/245527

(56) Documents cités:
- WO-A1-2016/026739
- DE-A1- 19 625 297
- US-A1- 2006 060 695

## Description

### Domaine technique

La présente invention concerne un dispositif de transfert de charge pour lever une charge utile, notamment à bord d'un aérostat. Elle vise aussi un procédé de levage mettant en oeuvre ce dispositif.

Le domaine de l'invention est plus particulièrement, mais de manière non limitative, celui des ballons dirigeables.

### État de la technique antérieure

La sécurité d'un aérostat doit être assurée par la maîtrise de la charge qu'il embarque, de sorte que celle-ci soit sensiblement constante dans le temps.

Le levage, le transport et la dépose de charge utile présentant une masse importante au moyen d'un aérostat implique donc de résoudre une problématique liée à la variation de poids d'un aérostat qui n'est pas ramené à terre à chacun des embarquements ou débarquements des charges utiles.

On connaît le brevet DE 10148589 qui décrit un dispositif et un procédé d'échange de charges mettant en oeuvre un châssis de transport pouvant être levé puis fixé par des treuils auxiliaires sur un châssis de charge, lui-même pouvant être levé par un aérostat aux moyens de filins.

Le châssis de charge, comportant le système de ballast, est lié au châssis de transport d'une manière qui permette le transfert de ballast requis.

On peut noter que le châssis de charge se situe à peu près 25 mètres au-dessus du sol.

La solution selon l'art antérieur n'est pas totalement satisfaisante.

En effet, la construction est complexe et nécessite la mise en oeuvre d'ancrages et de treuils auxiliaires.

On connaît le document DE 19625297 A1 qui décrit un dispositif de transfert de charge. On connaît également le document WO 2016/026739 A1 qui décrit un dispositif de transfert de charge, mais seulement dans l'aérostat pour obtenir un ballastage/déballastage de l'aérostat. On connaît également le document US 2006/060695 A1 qui décrit un dispositif de charge, mais seulement dans l'aérostat pour obtenir un ballastage/déballastage de l'aérostat.

L'objet de l'invention est de proposer une interface de levage d'une charge permettant son remplacement sans aucune manutention de la charge durant les phases de chargement et déchargement, *tout en apportant une solution aux inconvénients précédemment mentionnés.*

### Exposé de l'invention

Un but de l'invention est notamment de remédier à tout ou partie des inconvénients précités.

A cet effet, selon un premier aspect de l'invention, il est proposé un dispositif de transfert de charge pour le transfert d'une charge utile par une grue embarquée entre un aérostat et le sol, comportant :
- une partie supérieure de levage agencée pour être fixée à des câbles de levage,
- une partie inférieure de support de charge utile agencée pour être fixée à la charge utile.

Selon le premier aspect de l'invention, la partie supérieure de levage comporte un réservoir de liquide et un orifice pour remplir ou vider le réservoir, et la partie inférieure est fixée de manière détachable sur la partie supérieure au moyen d'une fixation présentant une position verrouillée dans laquelle la partie supérieure est fixée à la partie inférieure, et une position déverrouillée dans laquelle la partie inférieure est libérée.

Le dispositif de transfert de charge selon l'invention permet de procéder au transfert de charge au niveau du sol, en assurant la sécurité de l'aérostat, en utilisant les mêmes élingues de levage à la descente et à la montée, et en procédant au remplissage et au vidage au niveau du sol, sans avoir à manipuler les câbles de levage au cours de l'opération.

Selon une possibilité, lequel l'orifice est agencé pour être interfacé avec des moyens de raccordement fluidique à un circuit de ballastage de l'aérostat qui comporte des capacités pour modifier la stabilité et/ou l'assiette de l'aérostat.

Le dispositif de transfert de charge selon l'invention peut avantageusement comporter en outre un moyen de maintien en position de verrouillage agencé pour maintenir la fixation en position de verrouillage lorsque la charge supportée par la fixation est supérieure à une force prédéterminée.

Le dispositif de transfert de charge selon l'invention peut avantageusement comporter en outre un moyen de déverrouillage agencé pour faire passer la fixation de la position verrouillée à la position déverrouillée lorsque la charge supportée par la fixation est inférieure à une force prédéterminée.

Selon un exemple de réalisation, le moyen de déverrouillage peut être conçu pour faire passer la fixation de la position verrouillée à la position déverrouillée de manière automatique - de préférence sans intervention humaine - lorsque masse supportée par la fixation est inférieure à la force prédéterminée.

Selon un deuxième aspect de l'invention, il est proposé un procédé de transfert de charge au sol par une grue embarquée d'une charge utile embarquée dans un aérostat mettant en oeuvre un dispositif de transfert de charge selon le premier aspect de l'invention, ou l'un ou plusieurs de ses perfectionnements, comportant les étapes suivantes :
- une mise en contact avec le sol par la grue embarquée de la partie inférieure et de sa charge utile,
- une dépose sur le sol de la partie inférieure par apport dans la partie supérieure d'une masse sensiblement égale à celle de l'ensemble de la partie inférieure par remplissage du réservoir de liquide,
- un déverrouillage de la fixation du dispositif de transfert de charge,
- un levage par la grue embarquée de la partie supérieure.

Selon une possibilité, le procédé de transfert de charge peut comporter une étape de modification de la stabilité et/ou de l'assiette de l'aérostat par remplissage de capacités à partir d'un circuit de ballastage relié au réservoir de liquide à bord de l'aérostat.

Selon un mode de réalisation, le procédé de transfert de charge peut comporter, l'une ou plusieurs, des étapes suivantes :
- une fixation de la charge utile sur la partie inférieure de support de charge utile du dispositif de transfert de charge,
- un verrouillage par la fixation de la partie inférieure sur la partie supérieure de levage du dispositif de transfert de charge,
- un levage du dispositif de transfert de charge par les câbles de levage fixés à la partie supérieure.

Avantageusement, préalablement à l'étape de levage du dispositif transfert de charge, le réservoir de liquide peut être vidangé. La quantité de ballast initialement présente ne peut dépendre simplement que de la masse de la charge et de l'état du dirigeable en termes de provisionnement. La dépose successive de plusieurs charges au cours d'un même voyage est bien entendu envisagée.

Selon une possibilité, le liquide peut être vidangé dans une piscine. Aussi, le liquide peut être réutilisable sur un site donné.

Selon un troisième aspect de l'invention, il est proposé un système comportant un aérostat équipé d'une grue et un dispositif de transfert de charge selon l'une le premier aspect de l'invention, ou l'un ou plusieurs de ses perfectionnements. Un tel système peut être désigné par le terme de grue aérostatique.

La grue aérostatique peut comporter en outre un circuit de ballastage agencé pour modifier la stabilité et/ou l'assiette de l'aérostat par remplissage de capacités et des moyens de raccordement fluidique du circuit de ballastage au réservoir de liquide du dispositif de transfert de charge.

Selon un exemple il est proposé un produit programme d'ordinateur, téléchargeable depuis un réseau de communication et/ou stocké sur un support lisible par ordinateur et/ou exécutable par un microprocesseur, et chargeable dans une mémoire interne d'une unité de calcul, caractérisé en ce qu'il comporte des instructions de code de programme qui, lorsqu'elles sont exécutées par l'unité de calcul, mettent en oeuvre les étapes du procédé de transfert de charge selon le deuxième aspect de l'invention, ou l'un ou plusieurs de ses perfectionnements.

### Description des figures

D'autres avantages et particularités de l'invention apparaîtront à la lecture de la description détaillée de mises en oeuvre et de modes de réalisation nullement limitatifs, au regard de dessins annexés sur lesquels :
- La figure 1 illustre schématiquement un mode de réalisation d'un système selon l'invention,
- La figure 2 illustre schématiquement un mode de réalisation d'un dispositif de transfert de charge selon l'invention,
- Les figures 3a, 3b, 4a et 4b illustrent schématiquement un procédé de déchargement d'une charge utile par le dispositif interface représenté sur la figure 2,

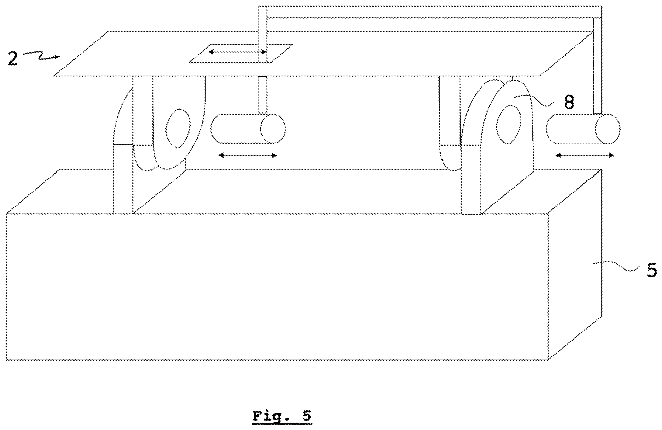

- La figure 5 illustre schématiquement un moyen de maintien en position de verrouillage.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

Sur les figures un élément apparaissant sur plusieurs figures conserve la même référence.

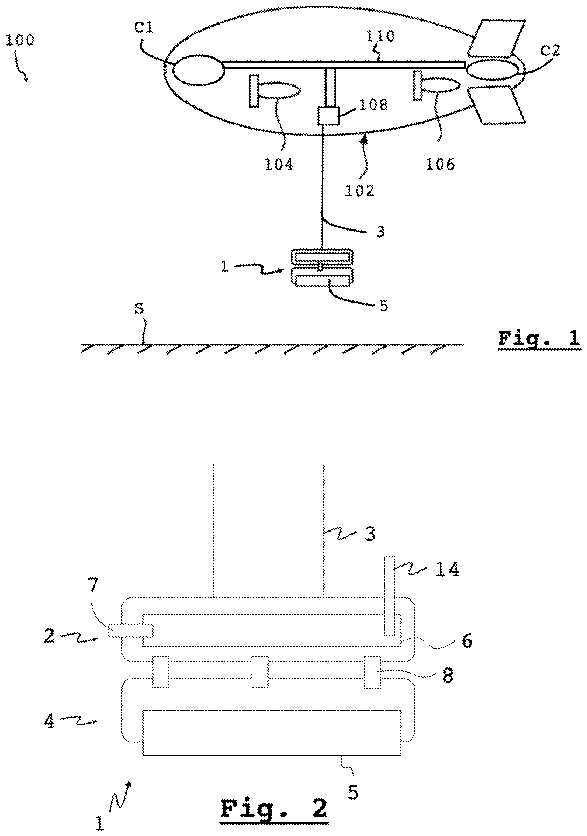

En référence à la figure 1, il est décrit un système 100, conforme à un mode de réalisation selon l'invention, de transfert de charge entre un aérostat 102 et un sol S.

Dans l'exemple représenté, l'aérostat 102 comporte des groupes propulseurs 104, 106.

Le système 100 comporte :
- l'aérostat 102 équipé d'une grue 108, schématisée, sur la figure 1,
- un dispositif de transfert de charge 1 selon l'invention, pour le transfert d'une charge utile 5 entre l'aérostat 102 et le sol S.

L'aérostat 102, lorsqu'il est équipé de la grue 108 et du dispositif de transfert de charge 1 selon l'invention peut être désigné sous le nom de grue aérostatique.

L'aérostat est en outre équipé de capacités C1 et C2, formant ballasts, et permettant la modification de la stabilité et/ou de l'assiette de l'aérostat 102 par remplissage ou vidange des capacités à partir d'un circuit de ballastage 110.

Comme cela est plus visible en référence à la figure 2, le dispositif de transfert de charge 1 comporte :
- une partie supérieure 2 de levage agencée pour être fixée à des câbles de levage 3,
- une partie inférieure 4 de support de charge utile agencée pour être fixée à une charge utile 5.

Selon l'invention, la partie supérieure 2 de levage comporte un réservoir 6 de liquide et un orifice 7 pour remplir ou vider le réservoir 6.

La partie inférieure 4 est fixée de manière détachable sur la partie supérieure 2 au moyen d'une fixation 8 présentant une position verrouillée dans laquelle la partie supérieure 4 est fixée à la partie inférieure 2, et une position déverrouillée dans laquelle la partie inférieure 4 est libérée.

La partie inférieure 4 peut être développée spécifiquement pour différentes charges utiles 5, selon un interfaçage optimisé avec la fixation 8 sur la partie supérieure 2. Selon l'invention, plusieurs charges utiles peuvent être déchargées séparément par l'aérostat au cours d'un même vol, à la condition qu'à chacune d'entre elles corresponde, au moins fonctionnellement, un dispositif de transfert de charge 1.

La partie supérieure 2 peut également être développée spécifiquement pour être interfacée avec des parties inférieures 4 spécifiques, mais en bon interfaçage avec les systèmes de levage 3.

Pour des besoins de sécurité opérationnelle, on peut concevoir la fixation 8 de manière à ce qu'elle ne puisse être ouverte que lorsqu' elle supporte une charge inférieure à un seuil prédéterminé. Lorsqu' elle est constituée de plusieurs points de fixation, ceux-ci doivent en outre être déverrouillés avec la synchronisation nécessaire.

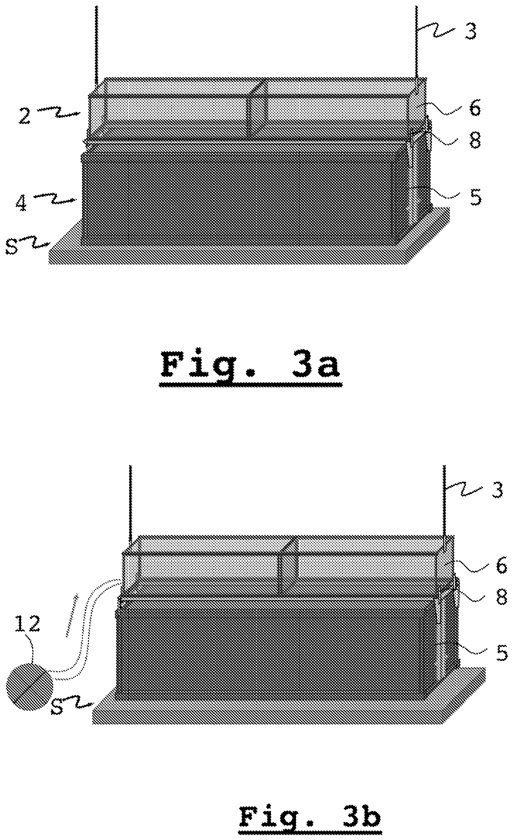

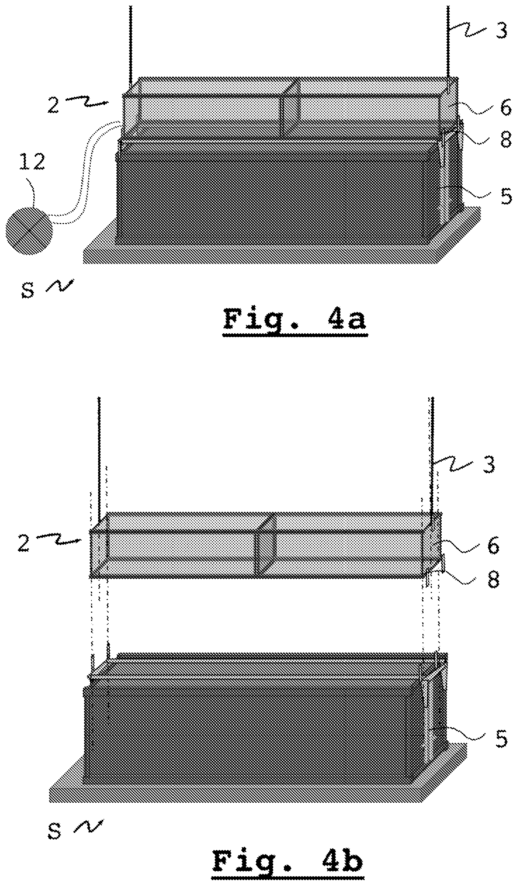

En référence aux figures 3 et 4, il est maintenant décrit un procédé de transfert au sol par la grue 108 de la charge utile 5 embarquée dans l'aérostat 102 mettant en oeuvre le dispositif de transfert de charge 1.

Le procédé de déchargement comporte les étapes suivantes :
- un contact avec le sol S de la charge utile 5 par l'aérostat 102 et sa grue 108, comme cela est illustré par la figure 3a,
- un apport dans la partie supérieure 2 d'une masse sensiblement égale à celle de l'ensemble de la partie inférieure 4 par remplissage du réservoir 6 de liquide, comme cela est illustré sur la figure 3b,
- un déverrouillage de la fixation 8 du dispositif de transfert de charge 1, comme cela est illustré sur la figure 4a,
- levage de la partie supérieure 2 dont le réservoir est rempli d'eau, comme cela est illustré sur la figure 4b.

L'étape illustrée sur la figure 3b est réalisée au moyen d'une pompe 12 raccordée à une citerne (non représentée) présente au sol sur le site de dépose.

Lorsque la charge est positionnée en contact avec le sol, les élingues sont toujours tendues, car le tout est porté par l'aérostat. L'apport d'eau permet d'alourdir l'ensemble. Cet apport permet la dépose effective du chargement au sol.

Au cours de l'opération, la masse {charge + châssis + ballast} est supportée d'abord par les câbles seuls, puis par les câbles et le sol, en transition continue vers l'état final, où le sol porte la charge et le châssis inférieur et les câbles portent le ballast et son châssis supérieur.

Lorsque la partie supérieure 2 est embarquée au sein de l'aérostat 102, le réservoir 6 de liquide peut être raccordé par des moyens de raccordement fluidiques 14 au circuit de ballastage 110 en vue de la modification de la stabilité et/ou de l'assiette de l'aérostat 102 par remplissage des capacités C1, respectivement C2, à partir du circuit de ballastage 110.

Bien entendu, l'invention concerne en outre un procédé de transport de la charge utile 5 par un aérostat mettant en oeuvre le dispositif 1 et comportant les étapes suivantes :
- une fixation de la charge utile 5 sur la partie inférieure 4 de support de charge utile,
- un verrouillage par la fixation 8 de la partie inférieure sur la partie supérieure 2,
- un levage du dispositif de transfert de charge 1 par des câbles de levage 3 fixés à la partie supérieure, puis
- un déchargement de la charge utile de l'aérostat selon la description précédemment réalisée.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif de transfert de charge (1) pour le transfert d'une charge utile (5) par une grue embarquée (108) entre un aérostat (102) et le sol (11), comportant :
- une partie supérieure (2) de levage agencée pour être fixée à des câbles de levage (3),
- une partie inférieure (4) de support de charge utile agencée pour être fixée à la charge utile, **caractérisé en ce que** la partie supérieure de levage comporte un réservoir (6) de liquide et un orifice (7) pour remplir ou vider le réservoir, et la partie inférieure est fixée de manière détachable sur la partie supérieure au moyen d'une fixation (8) présentant une position verrouillée dans laquelle la partie supérieure est fixée à la partie inférieure, et une position déverrouillée dans laquelle la partie inférieure est libérée.

2. Dispositif selon la revendication précédente, dans lequel l'orifice (7) est agencé pour être interfacé avec des moyens de raccordement fluidique (14) à un circuit de ballastage (110) de l'aérostat (102) qui comporte des capacités (C1, C2) pour modifier la stabilité et/ou l'assiette de l'aérostat.

3. Dispositif de transfert de charge selon l'une quelconque des revendications précédentes, comportant en outre un moyen de maintien en position de verrouillage agencé pour maintenir la fixation (8) en position de verrouillage lorsque la charge supportée par la fixation est supérieure à une force prédéterminée.

4. Dispositif de transfert de charge selon l'une quelconque des revendications précédentes, comportant en outre un moyen de déverrouillage agencé pour faire passer la fixation de la position verrouillée à la position déverrouillée lorsque la charge supportée par la fixation est inférieure à une force prédéterminée.

5. Dispositif de transfert de charge selon la revendication précédente, dans lequel le moyen de déverrouillage est conçu pour faire passer la fixation de la position verrouillée à la position déverrouillée de manière automatique lorsque masse supportée par la fixation est inférieure à la force prédéterminée.

6. Système (100) comportant un aérostat (102) équipé d'une grue embarquée (108) et un dispositif de transfert de charge (1) selon l'une quelconque des revendications 1 à 5.

7. Système (100) selon la revendication précédente comportant en outre un circuit de ballastage (110) agencé pour modifier la stabilité et/ou l'assiette de l'aérostat (102) par remplissage de capacités et des moyens de raccordement fluidique (14) du circuit de ballastage au réservoir (6) de liquide du dispositif de transfert de charge (1).

8. Procédé de transfert de charge au sol par une grue embarquée (108) d'une charge utile (5) embarquée dans un aérostat (102) mettant en oeuvre un dispositif de transfert de charge (1) selon l'une quelconque des revendications 1 à 5, comportant les étapes suivantes :
- une mise en contact avec le sol (S) par la grue embarquée (108) de la partie inférieure (4) et de sa charge utile (5),
- une dépose sur le sol de la partie inférieure (4) par apport dans la partie supérieure (2) d'une masse sensiblement égale à celle de l'ensemble de la partie inférieure (4) par remplissage du réservoir (6) de liquide,
- un déverrouillage de la fixation (8) du dispositif de transfert de charge,
- un levage par la grue embarquée de la partie supérieure.

9. Procédé selon la revendication précédente, comportant en outre une étape de modification de la stabilité et/ou de l'assiette de l'aérostat (102) par remplissage de capacités (C1, C2) à partir d'un circuit de ballastage (110) relié au réservoir (6) de liquide à bord de l'aérostat (102).

10. Procédé de transfert de charge d'une charge utile (5) disposée sur le sol (S) dans un aérostat (102) par une grue embarquée (108) mettant en oeuvre un dispositif de transfert de charge (1) selon l'une quelconque des revendications 1 à 5, comportant les étapes suivantes :
- une fixation de la charge utile (5) sur la partie inférieure de support de charge utile (4) du dispositif de transfert de charge,
- un verrouillage par la fixation de la partie inférieure sur la partie supérieure (2) de levage du dispositif de transfert de charge,
- un levage du dispositif de transfert de charge (1) par les câbles de levage (3) fixés à la partie supérieure.

11. Procédé selon la revendication précédente, dans lequel, préalablement à l'étape de levage du dispositif transfert de charge, le réservoir de liquide est vidangé.

12. Procédé selon la revendication précédente, dans lequel le liquide est vidangé dans une piscine.

## Patentansprüche

1. Lastübertragungsvorrichtung (1) für die Übertragung einer Nutzlast (5) durch einen Bordkran (108) zwischen einem Luftfahrzeug (102) und dem Boden (11), umfassend:
- ein oberes Hebeteil (2), das eingerichtet ist, um an Hubseilen (3) befestigt zu werden,
- ein unteres Nutzlastträgerteil (4), das eingerichtet ist, um an der Nutzlast befestigt zu werden, **dadurch gekennzeichnet, dass** das obere Hebeteil einen Flüssigkeitsbehälter (6) und eine Öffnung (7) zum Auffüllen oder Entleeren des Behälters umfasst und das untere Teil an dem oberen Teil mittels einer Befestigung (8) lösbar befestigt ist, aufweisend eine verriegelte Position, in der das obere Teil an dem unteren Teil befestigt ist, und eine entriegelte Position, in der das untere Teil freigegeben wird.

2. Vorrichtung nach dem vorstehenden Anspruch, wobei die Öffnung (7) eingerichtet ist, um mit Fluidverbindungsmitteln (14) mit einem Ballastkreislauf (110) des Luftfahrzeugs (102), der Kapazitäten (C1, C2) zum Verändern der Stabilität und/oder der Trimmung des Luftfahrzeugs umfasst, eine Schnittstelle zu bilden.

3. Lastübertragungsvorrichtung nach einem der vorstehenden Ansprüche, ferner umfassend ein Haltemittel in einer Verriegelungsposition, das eingerichtet ist, um die Befestigung (8) in der Verriegelungsposition zu halten, wenn die durch die Befestigung getragene Last größer als eine vorbestimmte Kraft ist.

4. Lastübertragungsvorrichtung nach einem der vorstehenden Ansprüche, ferner umfassend ein Entriegelungsmittel, das eingerichtet ist, um die Befestigung aus der verriegelten Position in die entriegelte Position zu leiten, wenn die durch die Befestigung getragene Last kleiner als eine vorbestimmte Kraft ist.

5. Lastübertragungsvorrichtung nach dem vorstehenden Anspruch, wobei das Entriegelungsmittel ausgelegt ist, um die Befestigung von der verriegelten Position in die entriegelte Position automatisch zu leiten, wenn die durch die Befestigung getragene Masse kleiner als die vorbestimmte Kraft ist.

6. System (100), umfassend ein Luftfahrzeug (102), das mit einem Bordkran (108) und einer Lastübertragungsvorrichtung (1) nach einem der Ansprüche 1 bis 5 ausgestattet ist.

7. System (100) nach dem vorstehenden Anspruch, ferner umfassend einen Ballastkreislauf (110), der eingerichtet ist, um die Stabilität und/oder die Trimmung des Luftfahrzeugs (102) durch Auffüllen von Kapazitäten zu verändern, und Fluidverbindungsmittel (14) des Ballastkreislaufs mit dem Flüssigkeitsbehälter (6) der Lastübertragungsvorrichtung (1).

8. Verfahren für die Lastübertragung am Boden, durch einen Bordkran (108), einer Bordnutzlast (5) in ein Luftfahrzeug (102), bei dem eine Lastübertragungsvorrichtung (1) nach einem der Ansprüche 1 bis 5 eingesetzt wird, umfassend die folgenden Schritte:
- ein Inkonktaktbringen, durch den Bordkran (108), des unteren Teils (4) und seiner Nutzlast (5) mit dem Boden (S),
- ein Abstellen des unteren Teils (4) auf dem Boden durch Einbringen einer Masse in das obere Teil (2), die im Wesentlichen gleich der des gesamten unteren Teils (4) ist, durch Auffüllen des Behälters (6) mit Flüssigkeit,
- ein Entriegeln der Befestigung (8) der Lastübertragungsvorrichtung,
- ein Anheben des oberen Teils durch den Bordkran.

9. Verfahren nach dem vorstehenden Anspruch, ferner umfassend einen Schritt für die Änderung der Stabilität und/oder der Trimmung des Luftfahrzeugs (102) durch Auffüllen von Kapazitäten (C1, C2) aus einem Ballastkreislauf (110), der mit dem Flüssigkeitsbehälter (6) an Bord des Luftfahrzeugs (102) verbunden ist.

10. Verfahren für die Lastübertragung einer auf dem Boden (S) angeordneten Nutzlast (5) in ein Luftfahrzeug (102) durch einen Bordkran (108), der eine Lastübertragungsvorrichtung (1) nach einem der Ansprüche 1 bis 5 einsetzt, umfassend die folgenden Schritte:
- eine Befestigung der Nutzlast (5) an dem unteren Teil des Nutzlastträgers (4) der Lastübertragungsvorrichtung,
- eine Verriegelung durch die Befestigung des unteren Teils an dem oberen Hebeteil (2) der Lastübertragungsvorrichtung,
- ein Anheben der Lastübertragungsvorrichtung (1) durch die an dem oberen Teil befestigten Hubseile (3).

11. Verfahren nach dem vorstehenden Anspruch, wobei vor dem Schritt des Anhebens der Lastübertragungsvorrichtung der Flüssigkeitsbehälter entleert wird.

12. Verfahren nach dem vorstehenden Anspruch, wobei die Flüssigkeit in ein Becken entleert wird.

## Claims

1. Load-transfer device (1) for transferring a payload (5) between a lighter-than-air aircraft (102) and the ground (11) using an on-board crane (108), comprising:
- an upper lifting portion (2) arranged to be attached to lifting cables (3),
- a lower portion (4) for supporting the payload and arranged to be attached to the payload, **characterized in that** the upper lifting portion comprises a liquid tank (6) and an opening (7) for filling or emptying the tank, and the lower portion is detachably attached to the upper portion by means of an attachment member (8) having a locked position in which the upper portion is attached to the lower portion, and an unlocked position in which the lower portion is released.

2. Device according to the preceding claim, wherein the opening (7) is arranged to be interfaced with means (14) for fluid connection to a ballast circuit (110) of the lighter-than-air aircraft (102) which comprises volumes (C1, C2) for changing the stability and/or attitude of the lighter-than-air aircraft.

3. Load-transfer device according to either of the preceding claims, further comprising a holding means for holding in the locked position, the holding means being arranged to hold the attachment member (8) in the locked position when the load supported by the attachment member is greater than a predetermined force.

4. Load-transfer device according to any of the preceding claims, further comprising an unlocking means arranged to transfer the attachment member from the locked position to the unlocked position when the load supported by the attachment member is smaller than a predetermined force.

5. Load-transfer device according to the preceding claim, wherein the unlocking means is designed to transfer the attachment member from the locked position to the unlocked position automatically when a mass supported by the attachment member is smaller than the predetermined force.

6. System (100) comprising a lighter-than-air aircraft (102) equipped with an on-board crane (108) and a load-transfer device (1) according to any of claims 1 to 5.

7. System (100) according to the preceding claim, further comprising a ballast circuit (110) arranged to change the stability and/or the attitude of the lighter-than-air aircraft (102) by filling volumes and means (14) for fluidically connecting the ballast circuit to the liquid tank (6) of the load-transfer device (1).

8. Method for transferring a load to the ground using an on-board crane (108) of a payload (5) on-board a lighter-than-air aircraft (102), which method implements a load-transfer device (1) according to any of claims 1 to 5, comprising the following steps:
- placing the lower portion (4) and its payload (5) in contact with the ground (S) using the on-board crane (108),
- laying the lower portion (4) on the ground by introducing a mass substantially equal to the overall mass of the lower portion (4) into the upper portion (2) by filling the liquid tank (6),
- unlocking the attachment member (8) from the load-transfer device,
- lifting the upper portion using the on-board crane.

9. Method according to the preceding claim, further comprising a step of changing the stability and/or the attitude of the lighter-than-air aircraft (102) by filling volumes (C1, C2) from a ballast circuit (110) connected to the liquid tank (6) on board the lighter-than-air aircraft (102).

10. Method for transferring a load of a payload (5) arranged on the ground (S) into a lighter-than-air aircraft (102) using an on-board crane (108), which method implements a load-transfer device (1) according to any of claims 1 to 5, comprising the following steps:
- attaching the payload (5) to the lower portion for supporting the payload (4) of the load-transfer device,
- locking by attaching the lower portion to the upper portion (2) for lifting the load-transfer device,
- lifting the load-transfer device (1) using the lifting cables (3) attached to the upper portion.

11. Method according to the preceding claim, wherein, prior to the step of lifting the load-transfer device, the liquid tank is drained.

12. Method according to the preceding claim, wherein the liquid is drained in a swimming pool.
